# EUROPÄISCHE PATENTSCHRIFT

(11) **EP 2 746 101 B1**
(45) Veröffentlichungstag und Bekanntmachung des Hinweises auf die Patenterteilung: **01.11.2017**
(21) Anmeldenummer: 13196909.9
(22) Anmeldetag: 12.12.2013
(51) Int. Cl.: B60N 2/50, B60N 2/427, B60N 2/06, B60N 2/14

(54) **Nutzfahrzeugsitz mit einer Drehverstelleinrichtung-Überlastsicherungseinheit**
Commercial vehicle seat with a securing unit in case of an overload of the rotating adjustment device
Siège de véhicule utilitaire doté d'une sécurité contre les surcharges du dispositif de réglage rotatif

(30) Priorität: 18.12.2012 DE 102012112528
(43) Veröffentlichungstag der Anmeldung: 25.06.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A2- 2 213 504
- JP-A- H11 198 692
- JP-A- 2002 306 267

## Beschreibung

Die Erfindung betrifft einen Nutzfahrzeugsitz mit einem Sitzteil, mit einem Rückenlehnenteil und mit einem Sitzunterbau zum Anordnen an einem Karosserieteil eines Nutzfahrzeugs, bei welchem der Sitzunterbau eine Drehverstelleinrichtung zum Drehen zumindest des Sitzteils gegenüber dem Karosserieteil mit einer Kugellagereinheit, mit einem drehfesten Schalenfestteil und mit einem gegenüber dem drehfesten Schalenfestteil drehbaren Schalendrehteil aufweist, und bei welchem die Kugellagereinheit wenigstens ein Kugelkranzteil umfasst, welches derart bezüglich kreisförmiger Kugellaufbahnen des drehfesten Schalenfestteils und des drehbaren Schalendrehteils zwischen dem drehfesten Schalenfestteil und dem drehbaren Schalendrehteil angeordnet ist, dass das drehbare Schalendrehteil gegenüber dem drehfesten Schalenfestteil drehbeweglich abgestützt angeordnet ist.

Gattungsgemäße Fahrzeugsitze mit derartigen Drehverstelleinrichtungen zum Drehen des Fahrzeugsitzes um eine Hochachse sind aus dem Stand der Technik gut bekannt. Damit der Fahrzeugsitz, insbesondere zum Einnehmen unterschiedlicher Sitz-Arbeitspositionen, leichtgängig und spielfrei um die Hochachse gedreht werden kann, sind die Drehverstelleinrichtungen oftmals mit Kugelkränzen ausgestattet, bei welchen eine Vielzahl an gehärteten Kugeln in einem Käfig definiert gehalten werden. Diese Kugelkränze sind gegenüber kreisförmigen Kugellaufbahnen derart gelagert, dass die gehärteten Kugeln diesen kreisförmigen Kugellaufbahnen folgen können, wenn der Fahrzeugsitz um die Hochachse verdreht wird. Die kreisförmigen Kugellaufbahnen wiederum sind in Blechteilen eingepresst, welche aus einem weicheren Material bestehen als die gehärteten Kugeln. Bei hohen kritischen dynamischen, aber auch statischen Belastungen der Drehverstelleinrichtung, beispielsweise durch von auf den Fahrzeugsitz wirkenden Stößen infolge heftiger Fahrzeugbewegungen oder dergleichen, geben diese weicheren Blechteile mit der Zeit strukturell nach, so dass bedingt durch die härteren Kugeln an den weicheren Blechteilen Laufrillen oder andere Laufflächenschäden entstehen können. Diese Laufflächenschäden verursachen oftmals ein störend wahrnehmbares Spiel, welches stetig zunimmt, so dass erhebliche Komforteinbußen in Kauf genommen werden müssen oder oftmals kostspielige Instandsetzungsarbeiten erforderlich werden. Dies ist insbesondere bezüglich Nutzfahrzeugsitzen häufig der Fall, da diese höheren Belastungen ausgesetzt sind. Aus EP2213504 A2 ist ein Fahrzeugsitz mit den Merkmalen des Oberbegriffs des Anspruchs 1 bekannt. Es ist Aufgabe der Erfindung, gattungsgemäße Fahrzeugsitze hinsichtlich ihrer Drehverstelleinrichtung derart weiterzuentwickeln, dass zumindest die vorstehend erwähnten Nachteile überwunden werden.

Die Aufgabe der Erfindung wird von einem Nutzfahrzeugsitz mit einem Sitzteil, mit einem Rückenlehnenteil und mit einem Sitzunterbau zum Anordnen an einem Karosserieteil eines Nutzfahrzeugs gelöst, bei welchem der Sitzunterbau eine Drehverstelleinrichtung zum Drehen zumindest des Sitzteils gegenüber dem Karosserieteil mit einer Kugellagereinheit, mit einem Schalenfestteil und mit einem gegenüber dem Schalenfestteil drehbaren Schalendrehteil aufweist, und bei welchem die Kugellagereinheit wenigstens ein Kugelkranzteil umfasst, welches derart bezüglich kreisförmigen Kugellaufbahnen des Schalenfestteils und des Schalendrehteils zwischen dem Schalenfestteil und dem Schalendrehteil angeordnet ist, dass das Schalendrehteil gegenüber dem Schalenfestteil drehbeweglich abgestützt angeordnet ist, wobei der Nutzfahrzeugsitz sich durch eine Drehverstelleinrichtung-Überlastsicherungseinheit mit gegenüber dem Schalenfestteil oder dem Schalendrehteil ortsfest angeordneten Abstützelementen auszeichnet, mittels welchen das Schalendrehteil und das Schalenfestteil gegeneinander zusätzlich abstützbar sind, wenn die Tragfähigkeit einer der kreisförmigen Kugellaufbahnen einen kritischen Deformationswert erreicht oder überschreitet.

Durch diese erfindungsgemäße Drehverstelleinrichtung-Überlastsicherungseinheit können kritische Belastungszustände an Bauteilen und/oder Bauteilbereichen, wie den kreisförmigen Kugellaufbahnen, konstruktiv einfach verhindert werden, wodurch die Lebensdauer der Drehverstellvorrichtung erheblich gesteigert werden kann. Insbesondere kann hierdurch eine ausgezeichnete Wankabstützung zwischen den beiden Schalenteilen der Drehverstelleinrichtung erzielt werden.

Vorzugsweise sind hierzu die Abstützelemente unmittelbar zwischen dem Schalendrehteil und dem Schalenfestteil wirkend angeordnet, so dass im Bedarfsfall eine direkte gegenseitige Abstützung dieser beiden Schalenteile zueinander erfolgen kann, so dass eine in sich äußerst stabil bauende Baueinheit bereitgestellt werden kann.

Idealerweise sind die Abstützelemente hierzu ortsfest an dem Schalenfestteil angeordnet.

Jedenfalls wird durch diese Abstützelemente erzielt, dass das Schalendrehteil und das Schalenfestteil selbst an ihren bezüglich einer gemeinsamen Mittelachse radial weiter außen liegenden Randbereichen immer einen Mindestabstand zueinander einhalten. Die Mittelachse fällt hierbei mit einer Hochachse, um welche das Schalendrehteil dreht, zusammen.

Bei hohen dynamischen wie auch statischen Belastungen werden, wie im Stand der Technik auch, die als Blechteile ausgestalteten Schalenteile nach wie vor verwunden. Bevor es jedoch aufgrund einer kritisch angestiegenen Belastung vorliegend zur plastischen Deformation der Schalenteile, insbesondere deren kreisförmigen Kugellaufbahnen, kommen kann, werden die Abstützelemente durch Neigung der beiden Schalenteile zueinander mehr und mehr mit Abstützkräften belastet, bis die Abstützelemente tragende Funktionen übernehmen und hierbei insbesondere fluchtend zu der Drehachse des Schalendrehteils verlaufende Abstützkräfte aufnehmen und an das Schalenfestteil übertragen. Hierdurch kann ein kritischer Belastungsanstieg an den kreisförmigen Kugellaufbahnen der Drehverstelleinrichtung effektiv verhindert werden.

Eine kritische Deformation liegt im Sinne der Erfindung insbesondere dann vor, wenn es sich um eine plastische Deformation, also um eine irreversible Deformation, handelt.

Der Begriff "Schalendrehteil" beschreibt im Sinne der Erfindung ein drehfestes Schalenteil der Drehverstelleinrichtung. Dementsprechend beschreibt der Begriff "Schalendrehteil" im Sinne der Erfindung ein gegenüber dem drehfesten Schalenfestteil drehbares Schalenteil der Drehverstelleinrichtung.

Eine vorteilhafte Ausführungsvariante sieht vor, dass die Abstützelemente derart ausgestaltet sind, dass deren Abstützwirkungen erst dann einsetzen, wenn das Schalendrehteil und/oder das Schalenfestteil oder eine der kreisförmigen Kugellaufbahnen hiervon einen kritischen elastischen Deformationswert erreichen oder überschreiten.

Solche kritischen elastischen Deformationswerte hängen unter anderem von der Wahl der Werkstoffe ab, aus welchen die Schalenteile hergestellt sind. Aber auch die gewählten Bauteildimensionen spielen hierbei eine Rolle. Erfindungsgemäß weisen die Abstützelemente in Abhängigkeit eines Kompressionsgrades entfaltbare Abstützwirkungen auf. Hierdurch kann gewährleistet werden, dass die Abstützelemente bei einer unkritischen Belastung der Drehverstelleinrichtung lediglich einen schleifenden Kontakt bedingen, wodurch eine Drehfähigkeit der Drehverstelleinrichtung nicht oder nur vernachlässigbar gering beeinflusst wird.

Insofern ist es vorteilhaft, wenn die Abstützelemente in einem unkritischen Deformationszustand des Schalendrehteils und/oder des Schalenfestteils gegenüber dem Schalendrehteil oder dem Schalenfestteil berührungslos oder gleitwirkend angeordnet sind, um im Normalbetrieb die Drehfähigkeit der Drehverstelleinrichtung nicht unnötig einzuschränken. Hierdurch kann sichergestellt werden, dass die Drehverstelleinrichtung-Überlastsicherungseinheit erst bei sehr hohen Belastungen wirken kann, beispielsweise wenn das Nutzfahrzeug extrem schräg steht und hierdurch bedingt das wenigstens eine Kugelkranzteil nur partiell sehr hoch belastet ist.

Die vorliegenden Abstützelemente können nahezu an beliebigen Bauteilen des Sitzunterbaus angebracht sein. Baulich einfach lässt sich die Drehverstelleinrichtung realisieren, wenn die Abstützelemente an dem Schalendrehteil oder vorzugsweise an dem Schalenfestteil angeordnet sind. Insbesondere wird durch die bevorzugte Anordnungswahl die Anzahl an zusätzlich zu bewegenden Bauteilen an dem Schalendrehteil nicht nachteilig erhöht. Vorzugsweise weisen die Abstützelemente jeweils eine Gleitabstützfläche auf, welche dem Schalendrehteil oder dem Schalenfestteil zugewandt angeordnet ist. Durch diese Gleitabstützfläche kann die Drehfähigkeit der Drehverstellvorrichtung selbst dann sehr gut gewährleistet werden, wenn die Abstützelemente die Schalenteile der Drehverstellvorrichtung zusätzlich zueinander abstützen.

Ist die Gleitabstützfläche planparallel zu einer Gleitebene des Schalenfestteils oder des Schalenfestteils angeordnet, kann mittels der Gleitabstützfläche und der Gleitebene eine vorteilhaft große Kräfteübertragungsfläche zwischen dem Schalendrehteil und dem Schalenfestteil realisiert werden.

Eine besonders effektive Abstützung der beiden Schalenteile kann erzielt werden, wenn die Abstützelemente außerhalb der kreisförmigen Kugellaufbahnen und in Umfangsrichtung der kreisförmigen Kugellaufbahnen verteilt angeordnet sind.

Es versteht sich, dass eine unterschiedlich hohe Anzahl von Abstützelementen vorgesehen werden kann. So können beispielsweise acht oder mehr solcher Abstützelemente vorhanden sein. Für eine gute und betriebssichere Funktionsfähigkeit der Drehverstelleinrichtung-Überlastsicherungseinheit reicht es jedoch bereits aus, wenn vier Abstützelemente in Umfangsrichtung der kreisförmigen Kugellaufbahnen gleichmäßig verteilt angeordnet sind. Auch kann durch diese geringere Anzahl eine Reibwertbelastung an der Drehverstelleinrichtung infolge der Abstützelemente in einem normalverträglichen Rahmen gehalten werden.

Sind die Abstützelemente mehrteilig ausgestaltet, können konstruktiv einfach vielfältige Funktionseigenschaften erzielt werden.

Umfassen die Abstützelemente jeweils ein Gleitteil und ein Federteil, können sowohl besonders gute Gleiteigenschaften als auch besonders gute Abstützeigenschaften kombiniert werden.

Vorteilhafterweise ist das Gleitteil innerhalb des Federteils derart eingebettet angeordnet, dass es problemlos die Gleitabstützfläche bereitstellen kann.

Es versteht sich, dass insbesondere das Federteil vielfältig ausgestaltet sein kann. Idealerweise ist es als Tellerfederteil ausgebildet, welches einen Kragenbereich zum Abstützen an dem Trägerbauteil umfasst. Hierdurch können sehr gute Federeigenschaften erreicht werden.

Das Gleitteil kann baulich einfach mit einem zylindrischen Grundkörper ausgeführt sein.

Insbesondere gute Gleiteigenschaften hinsichtlich der Gleitabstützfläche können erreicht werden, wenn die Abstützelemente zumindest teilweise aus einem Kunststoff oder einem Compound hiervon hergestellt sind.

Weitere Vorteile, Ziele und Eigenschaften vorliegender Erfindung werden anhand anliegender Zeichnung und nachfolgender Beschreibung erläutert, in welchen beispielhaft ein Nutzfahrzeugsitz mit einer Drehverstelleinrichtung und mit einer zusätzliche Abstützelemente umfassenden Drehverstelleinrichtung-Überlastsicherungseinheit dargestellt und beschrieben ist. In der Zeichnung zeigen:
- Figur 1: schematisch eine perspektivische Ansicht eines Nutzfahrzeugsitzes mit einem eine Horizontalbewegungsvorrichtung umfassenden Sitzunterbau, welche eine Drehverstelleinrichtung und eine Abstützelemente umfassende Drehverstellein-richtung-Überlastsicherungseinheit aufweist;
- Figur 2: schematisch eine perspektivische Ansicht der Horizontalbewegungsvorrichtung des Sitzunterbaus des Nutzfahrzeugsitzes aus der Figur 1;
- Figur 3: schematisch eine Explosionsansicht der Horizontalbewegungsvorrichtung aus den Figuren 1 und 2;
- Figur 4: schematisch eine Aufsicht auf ein Unterschalenteil der Drehverstelleinrichtung aus den Figuren 1 bis 3; und
- Figur 5: schematisch eine Detailansicht eines Abstützelements der Drehverstelleinrich-tung-Überlastsicherungseinheit.

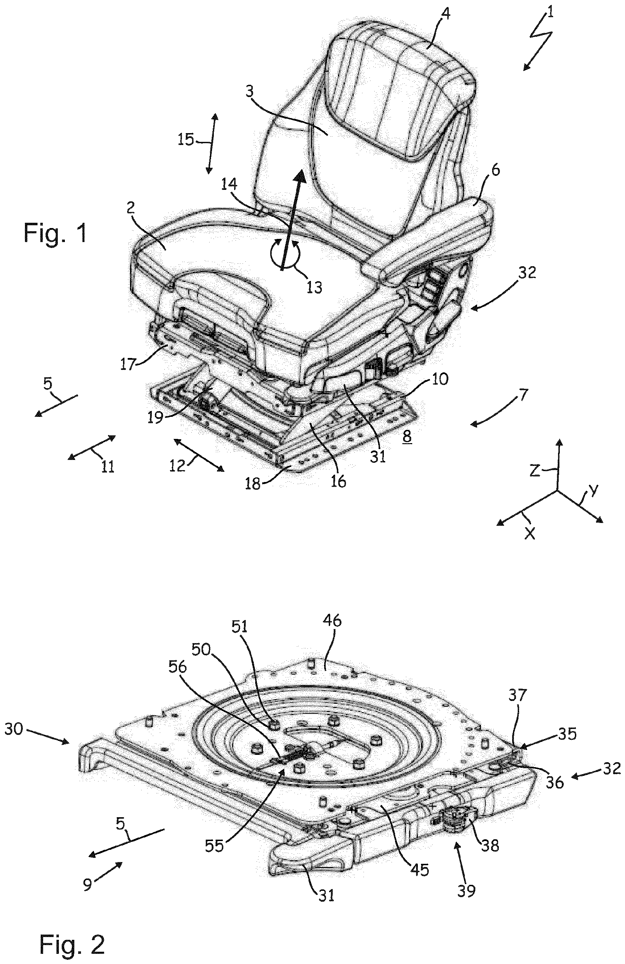

Der in der Figur 1 gezeigte Nutzfahrzeugsitz 1 umfasst ein Sitzteil 2 zum Daraufsitzen eines Fahrgastes und ein Rückenlehnenteil 3 zum rückseitigen Abstützen des Fahrgastes. Das Rückenlehnenteil 3 ist in diesem Ausführungsbeispiel noch mit einem Kopfstützenteil 4 ausgerüstet. In Vorwärtsfahrrichtung 5 gesehen ist rechts seitlich an dem Rückenlehnenteil 3 zusätzlich noch ein Armlehnenteil 6 befestigt. Des Weiteren umfasst der Nutzfahrzeugsitz 1 noch einen Sitzunterbau 7, mittels welchem der Nutzfahrzeugsitz 1 in seiner Gesamtheit an einem Karosserieteil 8, wie etwa einem Kabinenboden einer Nutzkraftfahrzeugkabine, befestigt ist.

Um den Nutzfahrzeugsitz 1 vielfältig an die unterschiedlichsten Einsatzerfordernisse des Fahrgastes anpassen und auch einen bestmöglichen Sitzkomfort bieten zu können, weist der Sitzunterbau 7 in diesem Ausführungsbeispiel eine Horizontalbewegungsvorrichtung 9 und eine Vertikalbewegungsvorrichtung 10 auf.

Mittels der Horizontalbewegungsvorrichtung 9 kann zumindest das Sitzteil 2 und damit verbundene Bauteile, wie beispielsweise das Rückenlehnenteil 3, translatorisch in Längsverstellrichtung 11 (x-Achse) und translatorisch in Seitenverstellrichtung 12 (y-Achse) sowie rotatorisch in Drehverstellrichtung 13 um eine Hochachse 14 (z-Achse) bewegt werden, wie nachfolgend noch erläutert ist. Die Horizontalbewegungsvorrichtung 9 besitzt aufgrund ihrer kompakten Bauweise in diesem Ausführungsbeispiel lediglich eine sehr geringe Bauhöhe von 57 mm.

Mittels der Vertikalbewegungsvorrichtung 10 kann zumindest das Sitzteil 2 und damit verbundene Bauteile, wie eben das Rückenlehnenteil 3, translatorisch in Vertikalverstellrichtung 15 bezüglich der Hochachse 14 bewegt werden. Hierzu umfasst die Vertikalbewegungsvorrichtung 10 ein Scherengestell 16, welches zwischen einer Deckenplatte 17, welche die Horizontalbewegungsvorrichtung 9 trägt, der Vertikalbewegungsvorrichtung 10 und einer Bodenplatte 18 der Vertikalbewegungsvorrichtung 10 derart angeordnet ist, dass die Horizontalbewegungsvorrichtung 9 gegenüber der Bodenplatte 18 vertikal beweglich gelagert ist. Des Weiteren umfasst die Vertikalbewegungsvorrichtung 10 noch eine Dämpfer-Federeinrichtung 19 zum Federn und Dämpfen einer Vertikalbewegung an dem Nutzfahrzeugsitz 1 in Vertikalrichtung 15.

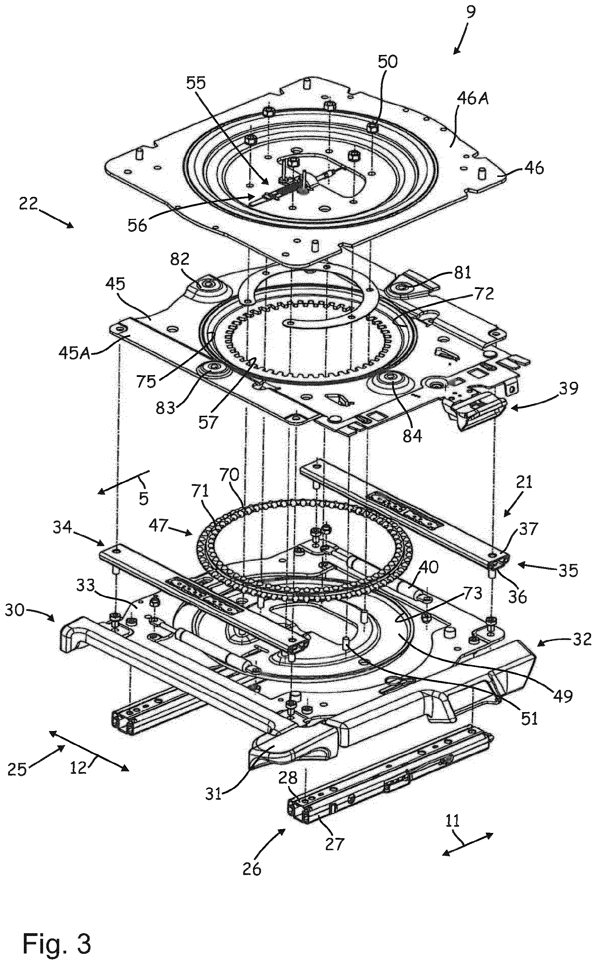

Die in den Figuren 2 und 3 näher gezeigte Horizontalbewegungsvorrichtung 9 umfasst eine Längsverstelleinrichtung 20, eine Querverstelleinrichtung 21 und eine Drehverstelleinrichtung 22, um den Nutzfahrzeugsitz 1 im Sinne der vorgenannten Längsverstellrichtung 11, Seitenverstellrichtung 12 bzw. Drehverstellrichtung 13 bewegen bzw. einstellen zu können. Die Horizontalbewegungsvorrichtung 9 kann in einem anderen nicht minder vorteilhaften Ausführungsbeispiel auch nur eine der Verstelleinrichtungen 20, 21 und 22 oder eine beliebig andere Kombination hiervon aufweisen.

Mittels der Längsverstelleinrichtung 20 kann ein vorderer Längsverstellweg von 120 mm und ein hinterer Längsverstellweg von 90 mm bezogen auf eine Neutrallängsposition erzielt werden, während mittels der Querverstelleinrichtung 21 ein Querverstellweg um eine Neutralquerposition von +/- 25 mm erreicht werden kann. Mittels der Drehverstelleinrichtung 22 kann in 7,5° Schritten jeweils eine Schwenkbewegung von 60° um eine Neutraldrehposition und/oder eine 180° Drehung erreicht werden.

Die Längsverstelleinrichtung 20 liegt im Wesentlichen auf einer horizontalen Höhe der Drehverstelleinrichtung 22, wodurch die Horizontalbewegungsvorrichtung 9 extrem flach baut. Die Längsverstelleinrichtung 20 umfasst im Wesentlichen eine rechte Längsschieneneinheit 25 und eine linke Längsschieneneinheit 26 (siehe Figur 3), wobei jede der Längsschieneneinheiten 25, 26 ein Führungsschienenelement 27 (nur exemplarisch beziffert) und ein Gleitschienenelement 28 (ebenfalls nur exemplarisch beziffert) umfasst. Das Führungsschienenelement 27 ist hierbei an der Deckenplatte 17 der Vertikalbewegungsvorrichtung 10 angeschraubt, und damit oberhalb der Vertikalbewegungsvorrichtung 10 zwischen dieser und dem Sitzteil 2 angeordnet.

Darüber hinaus ist der Längsverstelleinrichtung 20 in diesem Ausführungsbeispiel noch eine Doppelarretiereinheit 30 zugeordnet, mittels welcher das jeweilige Gleitschienenelement 28 an dem entsprechenden Führungsschienenelement 27 verriegelbar bzw. entriegelbar ist, so dass der Nutzfahrzeugsitz 1 in der Längsverstellrichtung 11 festgelegt oder bewegt werden kann.

Um die Doppelarretiereinheit 30 durch den Fahrgast manuell betätigen können, umfasst die Längsverstelleinrichtung 11 noch ein händisch betätigbares Greifelement 31, welches seitlich neben dem Sitzteil 2 in einer Betätigungskonsole 32 des Nutzfahrzeugsitzes 1 integriert angeordnet ist.

Die Gleitschienenelemente 28 der Längsschieneneinheiten 25 und 26, die Doppelarretiereinheit 30 und auch das händisch betätigbare Greifelement 31 mit seiner Mechanik sind an einem Basisträgerplattenteil 33 der Horizontalbewegungsvorrichtung 9 befestigt, an welchem ebenfalls Querschieneneinheiten 34 und 35 der Querverstelleinrichtung 21 befestigt sind. Jede der Querschieneneinheiten 34 und 35 weist ein Führungsschienenquerelement 36 und ein Gleitschienenquerelement 37 auf, um eine Bewegung gemäß der Seitenverstellrichtung 12 zu ermöglichen.

Darüber hinaus sind in den Darstellungen gemäß der Figuren 1 bis 3 noch weitere Komponenten der Querverstelleinrichtung 21 erkennbar, wie beispielsweise ein händisch betätigbares Hebelelement 38 (siehe insbesondere Figur 2) einer Verriegelungseinheit 39 zum Festlegen oder Lösen der Querverstelleinrichtung 21 sowie Dämpferelemente 40 (nur exemplarisch beziffert, siehe Figur 3) zum Dämpfen einer Lateralschwingung bei gelöster Querverstelleinrichtung 21.

Das jeweilige Führungsschienenquerelement 36 ist mit dem Basisträgerplattenteil 33 verschraubt ist, während das an dem Führungsschienenquerelement 36 entsprechend geführte Gleitschienenquerelement 37 jeweils an einem Unterschalenteil 45 angeordnet ist.

In diesem Ausführungsbeispiel gehört das Unterschalenteil 45 zu der Drehverstelleinrichtung 22 und bildet mit einem entsprechend geformten zweilagigen Oberschalenteil 46 eine Lagerung für eine Kugellagereinheit 47, wobei Komponenten hiervon im zusammengebauten Zustand der Horizontalbewegungsvorrichtung 9 in einer tellerförmigen Ausnehmung 48 des Unterschalenteils 45 eingelegt sind. Unterseitig wird die Kugellagereinheit 47 durch ein Deckelelement 49 komplettiert und geschützt, welches den zweiten Anteil des zweilagigen Oberschalenteils 46 bildet, und mit dessen Hilfe das Unterschalenteil 45, das Oberschalenteil 46 und damit auch die Kugellagereinheit 47 der Drehverstelleinrichtung 22 verspannt werden. Hierzu werden Schraubenmuttern 50 mit entsprechenden Gewindebolzen 51 des Deckelelements 49 verschraubt.

Die Drehverstelleinrichtung 22 wird mittels einer Zahnverriegelungseinheit 55 blockiert, welche ein Schieberelement 56 aufweist, das in einen Zahnkranz 57 eingreifen kann.

In diesem Ausführungsbeispiel gestaltet das Unterschalenteil 45 ein drehfestes Schalenfestteil 45A der Drehverstelleinrichtung 22 aus, welches drehfest in dem Sitzunterbau 7 integriert ist, während das vorliegende zweilagige Oberschalenteil 46 entsprechend ein gegenüber dem Schalenfestteil 45A drehbares Schalendrehteil 46A formuliert, welches mithilfe des Deckelelements 49 durch zwei Kugelkranzteile 70 und 71 der Kugellagereinheit 47 an dem Schalenfestteil 45A um die Hochachse 14 drehbar gelagert ist.

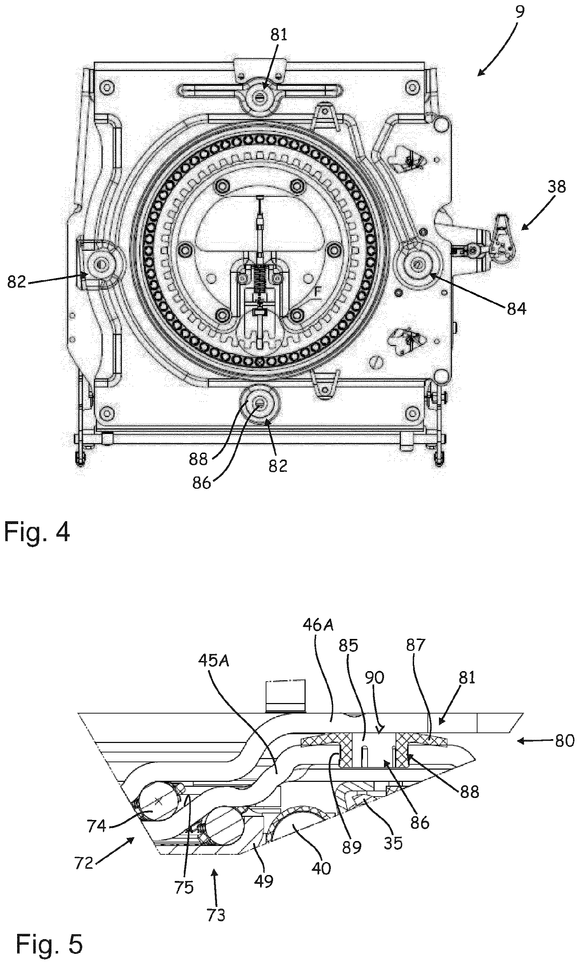

Darüber hinaus zeichnet sich die Kugellagereinheit 47 durch kreisförmige Kugellaufbahnen 72 und 73 (siehe insbesondere auch Figur 5) aus, entlang welcher die Vielzahl an Kugeln 74 (hier nur exemplarisch beziffert) der Kugelkranzteile 70 und 71 rollen können, wenn sich das Schalendrehteil 46A um die Hochachse 14 dreht.

Insbesondere die erste kreisförmige Kugellaufbahn 72 ist durch eine in dem Schalenfestteil 45A eingepresste tellerförmige Ausnehmung 75 gebildet, wobei das Schalendrehteil 46A eine hierzu komplementäre Ausformung umfasst. Ähnlich verhält es sich bezüglich der zweiten kreisförmigen Kugellaufbahn 73 hinsichtlich des Deckelelements 49 (deshalb nicht gesondert beziffert).

Vorteilhafterweise liegt die Kugellagereinheit 47 zumindest teilweise in einer Horizontalebene (hier nicht explizit eingezeichnet), in welcher ebenfalls die beiden Längsschienenschieneneinheiten 26 und 27 zumindest teilweise angeordnet sind, so dass die Bauhöhe der vorliegenden Horizontalbewegungsvorrichtung 9 nochmals enorm reduziert ist.

Der Begriff "Horizontalebene" ist im Sinne der vorliegenden Erfindung derart zu verstehen, dass diese Ebene sich in Fahrzeugbreitenrichtung und in Fahrzeuglängsrichtung erstreckt und nur dann horizontal ausgerichtet ist, wenn das Nutzfahrzeug sich auf horizontal ausgerichtetem Untergrund befindet. Andernfalls neigt sich diese Ebene mit Neigung des gesamten Nutzfahrzeugs entsprechend der Fahrzeugbreiten- und Fahrzeuglängsrichtung.

Um die Kugellagereinheit 47 und insbesondere die hiermit korrespondierende Kugellaufbahnen 72 und 73 vor Überlastungen schützen zu können, zeichnet sich der vorliegende Nutzfahrzeugsitz 1 speziell durch eine Drehverstelleinrichtung-Überlastsicherungseinheit 80 aus, welche insgesamt vier Abstützelemente 81, 82, 83 und 84 umfasst, mittels welchen das Schalendrehteil 46A und das Schalenfestteil 45A gegeneinander zusätzlich abstützbar sind, wenn die Tragfähigkeit einer der kreisförmigen Kugellaufbahnen 72, 73 einen kritischen Deformationswert erreicht oder überschreitet.

Alle Abstützelemente 81, 82, 83, 84 sind außerhalb der kreisförmigen Kugellaufbahnen 72 bzw. 73 und in Umfangsrichtung der kreisförmigen Kugellaufbahnen 72 bzw. 73 verteilt ortsfest an dem Schalenfestteil 45A angeordnet, wodurch eine effektive Abstützwirkung erzielt wird.

Aus der Darstellung gemäß der Figur 5 ist sehr gut zu erkennen, das jedes der Abstützelemente 81, 82, 83 und 84 aus einem Gleitteil 85, welches als zylindrisches Bauteil 86 aus Kunststoff hergestellt ist, und aus einem Federteil 87 besteht, welches als Federtellerelement 88 ebenfalls aus Kunststoff oder alternativ aus einem Elastomermaterial hergestellt ist.

Das jeweilige Abstützelement 81, 82, 83, 84 ist mit seinem Federteil 87 in einer Bohrung 89 des Schalenfestteils 45A eingebracht und somit dort ortsfest befestigt.

Das jeweilige Gleitteil 85 bildet eine Gleitabstützfläche 90 aus, welche der Unterseite des Schalendrehteils 46A zugewandt ist.

Je nachdem, ob es sich bei dem Nutzfahrzeugsitz 1 um einen Fahrersitz oder Beifahrersitz handelt, kann der Aufbau insbesondere des Sitzunterbaus 7 hinsichtlich der x-Achse auch spiegelbildlich ausgebildet sein, sprich: Die Betätigungskonsole 32 und insbesondere das händisch betätigbare Greifelement 31 kann anstatt auf der linken Nutzfahrzeugsitzseite auf der rechten Nutzfahrzeugsitzseite angeordnet sein.

Es versteht sich, dass es sich bei dem vorstehend erläuterten Ausführungsbeispiel lediglich um eine erste Ausgestaltung des erfindungsgemäßen Nutzfahrzeugsitzes handelt. Insofern beschränkt sich die Ausgestaltung der Erfindung nicht auf dieses Ausführungsbeispiel, sondern kann im Rahmen der nachstehenden Ansprüche abgewandelt werden.

### Bezugszeichenliste

- 1: Nutzfahrzeugsitz
- 2: Sitzteil
- 3: Rückenlehnenteil
- 4: Kopfstützenteil
- 5: Vorwärtsfahrrichtung
- 6: Armlehnenteil
- 7: Sitzunterbau
- 8: Karosserieteil
- 9: Horizontalbewegungsvorrichtung
- 10: Vertikalbewegungsvorrichtung
- 11: Längsverstellrichtung
- 12: Seitenverstellrichtung
- 13: Drehverstellrichtung
- 14: Hochachse
- 15: Vertikalverstellrichtung
- 16: Scherengestell
- 17: Deckenplatte
- 18: Bodenplatte
- 19: Dämpfer-Federeinrichtung
- 20: Längsverstelleinrichtung
- 21: Querverstelleinrichtung
- 22: Drehverstelleinrichtung
- 25: rechte Längsschieneneinheit
- 26: linke Längsschieneneinheit
- 27: Führungsschienenelement
- 28: Gleitschienenelement
- 30: Doppelarretiereinheit
- 31: Greifelement
- 32: Betätigungskonsole
- 33: Basisträgerplattenteil
- 34: vordere Querschieneneinheit
- 35: hintere Querschieneneinheit
- 36: Führungsschienenquerelement
- 37: Gleitschienenquerelement
- 38: Hebelelement
- 39: Verriegelungseinheit
- 40: Dämpferelemente
- 45: Unterschalenteil
- 45A: Schalenfestteil
- 46: Oberschalenteil
- 46A: Schalendrehteil
- 47: Kugellagereinheit
- 48: tellerförmige Ausnehmung
- 49: Deckelelement
- 50: Schraubenmuttern
- 51: Gewindebolzen
- 55: Zahnverriegelungseinheit
- 56: Schieberelement
- 57: Zahnkranz
- 70: erstes Kugelkranzteil
- 71: zweites Kugelkranzteil
- 72: erste kreisförmige Kugellaufbahn
- 73: zweite kreisförmige Kugellaufbahn
- 74: Kugeln
- 75: tellerförmige Ausnehmung
- 80: Drehverstelleinrichtung-Überlastsicherungseinheit
- 81: erstes Abstützelement
- 82: zweites Abstützelement
- 83: drittes Abstützelement
- 84: viertes Abstützelement
- 85: Gleitteil
- 86: zylindrisches Bauteil
- 87: Federteil
- 88: Federtellerelement
- 89: Bohrung
- 90: Gleitabstützfläche

## Patentansprüche

1. Nutzfahrzeugsitz (1) mit einem Sitzteil (2), mit einem Rückenlehnenteil (3) und mit einem Sitzunterbau (7) zum Anordnen an einem Karosserieteil (8) eines Nutzfahrzeugs, bei welchem der Sitzunterbau (7) eine Drehverstelleinrichtung (22) zum Drehen zumindest des Sitzteils (2) gegenüber dem Karosserieteil (8) mit einer Kugellagereinheit (47), mit einem Schalenfestteil (45A) und mit einem gegenüber dem Schalenfestteil (45A) drehbaren Schalendrehteil (46A) aufweist, und bei welchem die Kugellagereinheit (47) wenigstens ein Kugelkranzteil (70, 71) umfasst, welches derart bezüglich kreisförmiger Kugellaufbahnen (72, 73) des Schalenfestteils (45A) und des Schalendrehteils (46A) zwischen dem Schalenfestteil (45A) und dem Schalendrehteil (46A) angeordnet ist, dass das Schalendrehteil (46A) gegenüber dem Schalenfestteil (45A) drehbeweglich abgestützt angeordnet ist, wobei
eine Drehverstelleinrichtung-Überlastsicherungseinheit (80) mit gegenüber dem Schalenfestteil (45A) oder dem Schalendrehteil (46A) ortsfest angeordneten Abstützelementen (81, 82, 83, 84), mittels welchen das Schalendrehteil (46A) und das Schalenfestteil (45A) gegeneinander zusätzlich abstützbar sind, wenn die Tragfähigkeit einer der kreisförmigen Kugellaufbahnen (72, 73) einen kritischen Deformationswert erreicht oder überschreitet
**gekennzeichnet dadurch, dass**
die Abstützelemente (81, 82, 83, 84) in Abhängigkeit eines Kompressionsgrades entfaltbare Abstützwirkungen aufweisen.

2. Nutzfahrzeugsitz (1) nach Anspruch 1,
**dadurch gekennzeichnet, dass**
die Abstützelemente (81, 82, 83, 84) derart ausgestaltet sind, dass deren Abstützwirkungen erst dann einsetzen, wenn das Schalendrehteil (46A) und/oder das Schalenfestteil (45A) oder eine der kreisförmigen Kugellaufbahnen (72, 73) hiervon einen kritischen elastischen Deformationswert erreichen oder überschreiten.

3. Nutzfahrzeugsitz (1) nach einem der Ansprüche 1 oder 2,
**dadurch gekennzeichnet, dass**
die Abstützelemente (81, 82, 83, 84) in einem unkritischen Deformationszustand des Schalendrehteils (46A) und/oder des Schalenfestteils (45A) gegenüber dem Schalendrehteil (46A) oder dem Schalenfestteil (45A) berührungslos oder gleitwirkend angeordnet sind.

4. Nutzfahrzeugsitz (1) nach einem der Ansprüche 1 bis 3,
**dadurch gekennzeichnet, dass**
die Abstützelemente (81, 82, 83, 84) jeweils eine Gleitabstützfläche (90) aufweisen, welche dem Schalendrehteil (46A) oder dem Schalenfestteil (45A) zugewandt angeordnet ist.

5. Nutzfahrzeugsitz (1) nach Anspruch 4,
**dadurch gekennzeichnet, dass**
die Gleitabstützfläche (90) planparallel zu einer Gleitebene des Schalenfestteils (45A) oder des Schalendrehteils (46A) angeordnet ist.

6. Nutzfahrzeugsitz (1) nach einem der Ansprüche 1 bis 5,
**dadurch gekennzeichnet, dass**
die Abstützelemente (81, 82, 83, 84) mehrteilig ausgestaltet sind und insbesondere jeweils ein Gleitteil (85) und ein Federteil umfassen.

7. Nutzfahrzeugsitz (1) nach einem der Ansprüche 1 bis 6,
**dadurch gekennzeichnet, dass**
die Abstützelemente (81, 82, 83, 84) außerhalb der kreisförmigen Kugellaufbahnen (72, 73) und in Umfangsrichtung der kreisförmigen Kugellaufbahnen (72, 73) verteilt angeordnet sind.

8. Nutzfahrzeugsitz (1) nach einem der Ansprüche 1 bis 7,
**dadurch gekennzeichnet, dass**
die Abstützelemente (81, 82, 83, 84) zumindest teilweise aus einem Kunststoff oder einem Compound hiervon hergestellt sind.

## Claims

1. Commercial vehicle seat (1) comprising a seat part (2), a backrest part (3) and a seat substructure (7) for being arranged on a body part (8) of a commercial vehicle, in which the seat substructure (7) comprises a rotational adjustment device (22) for rotating at least the seat part (2) relative to the body part (8), which rotational adjustment device comprises a ball bearing unit (47), a shell fixed part (45A) and a shell rotational part (46A) that is rotatable relative to the shell fixed part (45A), and in which the ball bearing unit (47) comprises at least one ball rim part (70, 71) that is arranged between the shell fixed part (45A) and the shell rotational part (46A) with respect to the circular ball tracks (72, 73) of the shell fixed part (45A) and the shell rotational part (46A) such that the shell rotational part (46A) is arranged in a manner supported so as to be rotatable relative to the shell fixed part (45A),
an overload protection unit (80) for the rotational adjustment device, having support elements (81, 82, 83, 84) which are arranged in a stationary manner opposite the shell fixed part (45A) or the shell rotational part (46A) and by means of which the shell rotational part (46A) and the shell fixed part (45A) can be additionally supported with respect to one another if the load-bearing capacity of one of the circular ball tracks (72, 73) reaches or exceeds a critical deformation value,
**characterised in that**
the support elements (81, 82, 83, 84) have supporting effects that can be deployed depending on a degree of compression.

2. Commercial vehicle seat (1) according to claim 1,
**characterised in that**
the support elements (81, 82, 83, 84) are designed such that their supporting effects are only used if the shell rotational part (46A) and/or the shell fixed part (45A) or one of the circular ball tracks (72, 73) thereof reach or exceed a critical elastic deformation value.

3. Commercial vehicle seat (1) according to either claim 1 or claim 2,
**characterised in that**,
when the shell rotational part (46A) and/or the shell fixed part (45A) is/are in a noncritical state of deformation, the support elements (81, 82, 83, 84) are arranged opposite the shell rotational part (46A) or the shell fixed part (45A) in a contact-free or sliding manner.

4. Commercial vehicle seat (1) according to any of claims 1 to 3,
**characterised in that**
the support elements (81, 82, 83, 84) each comprise a sliding support surface (90) that is arranged so as to face the shell rotational part (46A) or the shell fixed part (45A).

5. Commercial vehicle seat (1) according to claim 4,
**characterised in that**
the sliding support surface (90) is arranged so as to be plane-parallel to a sliding plane of the shell fixed part (45A) or the shell rotational part (46A).

6. Commercial vehicle seat (1) according to any of claims 1 to 5,
**characterised in that**
the support elements (81, 82, 83, 84) are formed in multiple parts and in particular each comprise a sliding part (85) and a spring part.

7. Commercial vehicle seat (1) according to any of claims 1 to 6,
**characterised in that**
the support elements (81, 82, 83, 84) are arranged so as to be distributed outside the circular ball tracks (72, 73) and in the circumferential direction of the circular ball tracks (72, 73).

8. Commercial vehicle seat (1) according to any of claims 1 to 7,
**characterised in that**
the support elements (81, 82, 83, 84) are produced, at least in part, from a plastics material or a compound thereof.

## Revendications

1. Siège de véhicule utilitaire (1) avec une partie siège (2), avec une partie dossier (3) et avec une sous-structure de siège (7) pour la disposition sur une partie carrosserie (8) d'un véhicule utilitaire, dans lequel la sous-structure de siège (7) présente un dispositif de réglage à rotation (22) pour la rotation d'au moins la partie siège (2) par rapport à la partie carrosserie (8) avec une unité de roulement à billes (47), avec une partie coque stationnaire (45A) et avec une partie coque tournante (46A) qui est apte à tourner par rapport à la partie coque stationnaire (45A), et dans lequel l'unité de roulement à billes (47) comporte au moins une partie couronne de billes (70, 71), laquelle est disposée entre la partie coque stationnaire (45A) et la partie coque tournante (46A) par rapport à des pistes de billes circulaires (72, 73) de la partie coque stationnaire (45A) et de la partie coque tournante (46A) de telle sorte que la partie coque tournante (46A) est disposée supportée d'une façon déplaçable en rotation par rapport à la partie coque stationnaire (45A), dans lequel une unité de protection contre la surcharge de dispositif de réglage à rotation (80) avec des éléments de support (81, 82, 83, 84) qui sont disposés de façon fixe par rapport à la partie coque stationnaire (45A) ou à la partie coque tournante (46A), au moyen desquels la partie coque tournante (46A) et la partie coque stationnaire (45A) sont de plus aptes à être supportées l'une par rapport à l'autre, lorsque la capacité de support de l'une des pistes de billes circulaires (72, 73) atteint ou excède une valeur de déformation critique
**caractérisé par le fait que**
les éléments de support (81, 82, 83, 84) présentent des fonctions de support qui peuvent être développées en fonction d'un degré de compression.

2. Siège de véhicule utilitaire (1) selon la revendication 1,
**caractérisé par le fait que**
les éléments de support (81, 82, 83, 84) sont conçus de telle sorte que leurs fonctions de support débutent uniquement lorsque la partie coque tournante (46A) et/ou la partie coque stationnaire (45A) ou l'une des pistes de billes circulaires (72, 73) de celles-ci atteignent ou excèdent une valeur de déformation élastique critique.

3. Siège de véhicule utilitaire (1) selon l'une des revendications 1 ou 2,
**caractérisé par le fait que**
les éléments de support (81, 82, 83, 84) sont disposés sans contact ou d'une manière glissante par rapport à la partie coque tournante (46A) ou à la partie coque stationnaire (45A) dans un état de déformation non critique de la partie coque tournante (46A) et/ou de la partie coque stationnaire (45A).

4. Siège de véhicule utilitaire (1) selon l'une des revendications 1 à 3,
**caractérisé par le fait que**
les éléments de support (81, 82, 83, 84) présentent dans chaque cas une face de support glissante (90), laquelle est disposée tournée vers la partie coque tournante (46A) ou la partie coque stationnaire (45A).

5. Siège de véhicule utilitaire (1) selon la revendication 4,
**caractérisé par le fait que**
la face de support glissante (90) est disposée parallèle dans le plan à un plan de glissement de la partie coque stationnaire (45A) ou de la partie coque tournante (46A).

6. Siège de véhicule utilitaire (1) selon l'une des revendications 1 à 5,
**caractérisé par le fait que**
les éléments de support (81, 82, 83, 84) sont configurés en plusieurs pièces et, en particulier, comprennent respectivement une partie glissante (85) et une partie ressort.

7. Siège de véhicule utilitaire (1) selon l'une des revendications 1 à 6,
**caractérisé par le fait que**
les éléments de support (81, 82, 83, 84) sont disposés distribués à l'extérieur des pistes de billes circulaires (72, 73) et dans la direction périphérique des pistes de billes circulaires (72, 73).

8. Siège de véhicule utilitaire (1) selon l'une des revendications 1 à 7,
**caractérisé par le fait que**
les éléments de support (81, 82, 83, 84) sont fabriqués au moins en partie à partir d'une matière plastique ou d'un compound de celle-ci.
